# EUROPÄISCHE PATENTSCHRIFT

(11) **EP 2 890 655 B1**
(45) Veröffentlichungstag und Bekanntmachung des Hinweises auf die Patenterteilung: **20.03.2019**
(21) Anmeldenummer: 13755995.1
(22) Anmeldetag: 20.08.2013
(51) Int. Cl.: C03C 17/36, C03C 23/00, H01Q 15/00, B32B 17/10

(54) **BESCHICHTETE SCHEIBE MIT TEILENTSCHICHTETEN BEREICHEN**
COATED PANE WITH PARTIALLY UNCOATED SECTIONS
VITRE REVÊTUE AVEC ZONES PARTIELLEMENT SANS REVÊTEMENT

(30) Priorität: 28.08.2012 EP 12181939
(43) Veröffentlichungstag der Anmeldung: 08.07.2015
(73) Patentinhaber: Saint-Gobain Glass France, 92400 Courbevoie (FR)
(72) Erfinder: WOHLFEIL, Dirk, B-4730 Raeren (BE); ARSLAN, Ilkay, 52074 Aachen (DE); VON DER WEIDEN, Ingo, 52074 Aachen (DE); BEHMKE, Michael, 40227 Düsseldorf (DE); DROSTE, Stefan, 52134 Herzogenrath (DE)
(74) Vertreter: Gebauer, Dieter Edmund
(86) Internationale Anmeldenummer: PCT/EP2013/067294
(87) Internationale Veröffentlichungsnummer: WO 2014/033007

(56) Entgegenhaltungen:
- WO-A1-2012/066324
- DE-C1- 19 817 712

## Beschreibung

Die Erfindung betrifft eine beschichtete Scheibe mit Fenstern in Form von teilentschichteten Bereichen zur Durchlässigkeit von hochfrequenter elektromagnetischer Strahlung sowie ein Verfahren zu deren Herstellung und deren Verwendung.

Scheiben mit metallischen oder metallhaltigen Schichten sind sowohl im Bereich der Bauverglasungen als auch im Bereich der Fahrzeugverglasungen weit verbreitet. Diese metallbasierten Beschichtungen beeinflussen das Transmissions-, Reflexions- und Absorptionsverhalten von elektromagnetischer Strahlung. Elektrisch leitfähige Beschichtungen können zum Beheizen der Scheibe verwendet werden.

Metallhaltige Beschichtungen mit beispielsweise Silber können die Transmission infraroter Wärmestrahlung in dem hinter der Scheibe liegenden Raum eines Fahrzeuges oder Gebäudes deutlich verringern. Insbesondere bei Fahrzeugen kann diese Eigenschaft noch über einen elektrischen Anschluss mit einer Heizfunktion der silberhaltigen Beschichtung kombiniert werden. Der spezifische Flächenwiderstand von Silber ermöglicht die Beheizung einer Scheibe mit sehr dünnen silberhaltigen Schichten, wobei die Beschichtung für sichtbares Licht ausreichend transparent bleibt. Scheiben mit silberhaltigen Beschichtungen finden sich daher aufgrund der genannten Vorteile in immer mehr Fahrzeugen.

Scheiben mit metallhaltigen Beschichtungen beinhalten aber auch Nachteile. So wird beispielsweise radiofrequente Strahlung von vielen metallhaltigen Beschichtungen absorbiert. Die Funktionsweise vieler Sensoren, Navigations-, Telekommunikations- oder Radiogeräte wird hierdurch deutlich beeinträchtigt. Um diese Probleme zu lösen, ist in der Regel eine zumindest teilflächige Entschichtung der metallhaltigen Beschichtung notwendig. Im Beispiel von elektromagnetischer Strahlung im Radiofrequenzbereich wie FM, AM, UHF, VHF, DAB, Mobiltelefonie in den Bändern GSM 900, GSM 1800 und UMTS, satellitengestützter Navigation (GPS) oder Mikrowellenstrahlung ist hierzu eine netz- oder gitterartige Entschichtung notwendig. Die Gittermaschen müssen dabei einen Linienabstand aufweisen, welcher deutlich kleiner als die fragliche Wellenlänge der gewünschten elektromagnetischen Strahlung ist. Hierzu werden beispielsweise mit einem geeigneten Laser die metallhaltigen Beschichtungen in Form von Linien entfernt. Da nur geringe Anteile der metallhaltigen Beschichtung entfernt werden müssen, bleibt die Infrarotstrahlenabsorbierende Wirkung größtenteils erhalten.

EP 0 678 483 B1 offenbart ein Glassubstrat mit mehreren dünnen Schichten. Diese Schichten umfassen eine Haftschicht auf der Basis von Titanoxid, Zinnoxid oder Tantaloxid, eine Deckschicht und eine Funktionsschicht aus der Gruppe der rostfreien Stahle. Die Dicke der Funktionsschicht beträgt bevorzugt 15 nm bis 45 nm.

US 2002/0192473 A1 offenbart ein transparentes Substrat mit einer mehrlagigen Beschichtung welche Sonneneinstrahlung beeinflussen können. Die Beschichtung umfasst mindestens eine funktionelle Metallschicht aus Niob, Tantal oder Zirkonium und eine Deckschicht aus Aluminiumnitrid, Aluminiumoxynitrid oder Siliziumnitrid.

US 2011/0146172 A1 offenbart ein transparentes Substrat mit einer dünnen mehrschichtigen Beschichtung. Die mehrlagige Beschichtung umfasst dabei mindestens zwei absorbierende Funktionsschichten und zwei transparente Schichten aus einem dielektrischen Material. Die Funktionsschichten enthalten bevorzugt ein Metall der Gruppe aus Niob, Tantal und Zirkonium. In einer bevorzugten Ausführungsform sind die Funktionsschichten zumindest teilweise nitriert.

US 2007/0082219 A1 offenbart ein heizbares Glassubstrat mit einer mehrlagigen silberhaltigen Beschichtung. Die Beschichtung erlaubt sowohl eine Temperaturkontrolle im Fahrzeug als auch eine Heizfunktion der Scheibe. Die Beschichtung und damit die Scheibe sind für elektromagnetische Strahlung undurchlässig.

DE 198 17 712 C1 offenbart eine Glasscheibe mit einer Beschichtung und einem Strahlungsfenster. Das Fenster ist in einem begrenzten zusammenhängenden Flächenbereich der Platte ausgebildet, in dem ein Verhältnis von schichtfreier Fläche zur Gesamtfläche von mindestens 25 % bei flächiger Verteilung von schichtfreien und beschichteten Flächen vorliegt.

WO 2004/051869 A2 offenbart eine metallisch beschichtete Scheibe, welche eine für Radiofrequenzsignale durchlässiges Fenster aufweist. Das Fenster beinhaltet verschiedene für Radiofrequenzsignale durchlässige Strukturen, beispielsweise vertikale oder horizontale Balken oder zickzackförmige Strukturen.

US 6,730,389 B2 offenbart eine metallisch beschichtete Scheibe welche mehrere miteinander verbundene für radiofrequente Strahlung durchlässige Fenster aufweist.

WO 2012/066324 A1 offenbart ein Verfahren zur Herstellung einer beschichteten Verglasung mit einem für elektromagnetische Strahlung im Radiofrequenzbereich durchlässigen Fenster. Das Fenster wird durch eine zweidimensionale kurvenförmige Strukturierung mittels eines Lasers erzeugt.

Bei den meisten Verfahren zur Laserstrukturierung ist die Größe des möglichen Bearbeitungsfensters begrenzt. Der Laser kann nur Bereiche bis zu einer maximalen Größe in einem Arbeitsgang bearbeiten und strukturieren. Ist das Kommunikationsfenster größer als das Scanfenster des Lasers, so sind mehrere separate Arbeitsschritte erforderlich. Wird hierbei die erzeugte Struktur in einem zweiten Arbeitsschritt durch eine weitere Struktur ergänzt, so kommt es vielfach im Überschneidungsbereich zu Abweichungen wie beispielsweise Doppellinien, welche als Inhomogenitäten im optischen Aspekt den Gesamteindruck des strukturierten Bereichs stören. Auch mit Hilfe von größeren zweidimensionalen Plottern lassen sich diese Ungenauigkeiten im Bereich der sich überschneidenden Strukturen nicht lösen. Zudem leidet mit zunehmender Größe des Arbeitsfensters, beispielsweise eines Kommunikationsfensters, häufig die Genauigkeit und Reproduzierbarkeit der erzeugten Strukturen innerhalb der metallischen Beschichtung.

Die Aufgabe der vorliegenden Erfindung liegt darin, eine metallisch beschichtete Scheibe bereitzustellen welche aus mehreren überlagerten Kommunikationsfenstern besteht und keine oder nur geringe Inhomogenitäten im optischen Aspekt im Übergangsbereich aufweist.

Die Aufgabe der vorliegenden Erfindung wird gemäß dem unabhängigen Anspruch 1 gelöst. Bevorzugte Ausführungen gehen aus den Unteransprüchen hervor.

Eine durch das erfindungsgemäße Verfahren hergestellte ubeschichtete Scheibe mit Kommunikationsfenster sowie deren Verwendung gehen aus weiteren unabhängigen Ansprüchen hervor.

Die erfindungsgemäße beschichtete Scheibe mit einem Kommunikationsfenster umfasst mindestens eine Grundscheibe und eine metallhaltige Beschichtung. Die Scheibe enthält bevorzugt Flachglas, Floatglas, Quarzglas, Borosilikatglas, Kalk-Natron-Glas und/oder Gemische davon. Alternativ kann die Scheibe auch Polymere wie Polycarbonat oder Polymethylmethacrylat (Plexiglas) umfassen. Die metallhaltige Beschichtung enthält bevorzugt Niob, Tantal, Molybdän, Zirkonium, Silber Gold, Aluminium, Nickel, Chrom, Kupfer und/oder Gemische oder Legierungen davon, besonders bevorzugt Silber. Neben der eigentlichen Beschichtung sind bevorzugt noch weitere dielektrische Schichten vorhanden. Die dielektrische Schicht umfasst bevorzugt SiO₂, SnO₂, Bi₂O₃, ZnO, TiO₂, Ta₂O₅, AIN, Si₃N₄ und/oder Gemische davon. Die Reihenfolge der Abscheidung von dielektrischer Schicht und Funktionsschicht auf der Verbundscheibe ist variabel, bevorzugt werden mehrere Funktionsschichten und dielektrische Schichten auf der Verbundscheibe abgeschieden. Optional können weitere Schichten, beispielsweise Deckschichten, vorhanden sein. Die metallhaltige Beschichtung hat bevorzugt einen Flächenwiderstand von 0,5 Ohm/Quadrat bis 200 Ohm/Quadrat und besonders bevorzugt von 0,7 Ohm/Quadrat bis 30 Ohm/Quadrat. Die metallhaltige Beschichtung kann im Inneren einer Verbundglasscheibe angeordnet sein. Die metallhaltige Beschichtung kann alternativ auf einer der Außenseiten einer Einzelglasscheibe oder einer Verbundglasscheibe angeordnet sein.

Es befinden sich mindestens eine erste Gitterfläche und eine zweite Gitterfläche innerhalb der metallhaltigen Beschichtung und bilden zusammen ein Kommunikationsfenster. Der Ausdruck "Gitterfläche" beinhaltet im Sinne der Erfindung einen Bereich innerhalb der Beschichtung, welcher beispielsweise mit einem Laser eine linienförmige Entschichtung aufweist. Die linienförmige Entschichtung bildet dabei eine mit Netzmaschen strukturierte Kachel und wirkt auf der realen Scheibe leicht heller als die umliegende Beschichtung, insbesondere bei streifendem Lichteinfall oder in Reflektion.

Die erste Gitterfläche und die zweite Gitterfläche weisen eine bevorzugt rechteckige Grundform mit wie oben beschrieben entschichteten Bereichen in Form von netzartig angeordneten Gitterlinien auf. Der Abstand der einzelnen Gitterlinien richtet sich nach der Wellenlänge der entsprechenden elektromagnetischen Strahlung für die eine erhöhte Transmission gewünscht ist.

Die Gitterlinien in der ersten Gitterfläche gehen auf mindestens einer Längsseite in eine offene Kammstruktur über. Der Ausdruck "Kammstruktur" beschreibt eine Gitterfläche, in der auf mindestens einer Seite die Gitterlinien nicht von umliegenden Gitterlinien abgeschlossen werden und so eine kammähnliche Struktur mit Zinken oder Zähnen bilden. Gleichzeitig gehen die Gitterlinien in der zweiten Gitterfläche auf mindestens einer Längsseite in eine geschlossene Kammstruktur über, wobei die geschlossene Kammstruktur durch eine umrandende Gitterlinie nach außen hin begrenzt ist.

Die erste und die zweite Gitterfläche sind derart angeordnet, dass die erste Gitterfläche über mindestens eine Zinke der offenen Kammstruktur mit der geschlossenen Kammstruktur der zweiten Gitterfläche verbunden ist. Dies erfolgt dadurch, dass mindestens eine Zinke der offenen Kammstruktur eine die zweite Gitterfläche umrandende Gitterlinie berührt oder diese überschneidet.

Dies hat die Folge, dass durch die verbundenen Gitterflächen die elektrische Leitfähigkeit der Beschichtung unterbrochen ist und kein zusammenhängender elektrisch leitfähiger Bereich der Beschichtung zwischen den Gitterflächen mehr vorhanden ist. Dadurch entsteht ein vergrößertes Kommunikationsfenster aus erster und zweiter Gitterfläche, das heißt ein vergrößerter Bereich, der für elektromagnetische Strahlung im gewünschten Wellenlängenbereich durchlässig ist.

Der besondere Vorteil dieser erfindungsgemäßen Anordnung ist, dass sich keine optisch störenden verbreiterte Linien oder Doppellinien im Verbindungsbereich zwischen erster Gitterfläche und zweiter Gitterfläche bilden können. Derartige Doppellinien sind aus dem Stand der Technik bekannt, bei dem sich zwei Gitterflächen mit beidseitig geschlossener Kammstruktur überlagern. Aufgrund der Positionierungenauigkeit des Entschichtungsverfahrens ist es nach dem Stand der Technik nicht möglich, die umrandende Gitterlinie der ersten Gitterfläche mit der umrandenden Gitterlinie der zweiten Gitterfläche deckungsgleich übereinander anzuordnen.

In einer vorteilhaften Ausgestaltung der Erfindung sind mindestens zwei Zinken der offenen Kammstruktur mit der geschlossenen Kammstruktur verbunden, da dadurch der Bereich der sich zwischen den Zinken befindlichen elektrisch leitfähigen Schicht von der restlichen Umgebenden elektrisch leitfähigen Schicht unterbrochen wird. Die zwei Zinken sind bevorzugt in den jeweils außen liegenden Bereichen der offenen Kammstruktur, und besonders bevorzugt an den jeweils vorletzten Zinken, mit der geschlossenen Kammstruktur verbunden. Dies gewährleistet eine sichere elektrische Isolierung des zwischen den Zinken befindlichen Bereichs, auch wenn ein geringer horizontaler Versatz der Gitterflächen zueinander vorhanden ist. In einer weiteren vorteilhaften Ausgestaltung der Erfindung sind im Wesentlichen alle Zinken der jeweiligen offenen Kammstruktur mit der geschlossenen Kammstruktur verbunden. Dies hat den besonderen Vorteil, dass eine sichere Unterbrechung der elektrischen leitfähigen Schicht über einen großen Bereich erfolgt und der Übergangsbereich zwischen den Gitterflächen eine ähnlich hohe Transmission für elektromagnetische Strahlung im gewünschten Frequenzbereich aufweist, wie die Gitterflächen selbst. Im Wesentlichen alle Zinken bedeutet hier, dass bei einem horizontalen Versatz der Gitterflächen zueinander, eine der äußeren Zinken nicht mit der geschlossenen Kammstruktur verbunden sein muss beziehungsweise kann, wenn sie seitlich neben der zweiten Gitterfläche angeordnet ist.

Erfindungsgemäß überlappen die Zinken um einen von Null verschiedenen Überstand d mit der geschlossenen Kammstruktur und insbesondere mit dessen umrandender Gitterlinie.

In einer vorteilhaften Ausgestaltung der Erfindung beträgt der Überstand d von 0,1 mm bis 0,4 mm. Ein Überstand von d = 0 bedeutet hier, dass eine Zinke die endlich ausgedehnte umrandende Gitterlinie der anderen Gitterfläche berührt, aber nicht über diese hinausragt. Ein derartiger Überstand hat den besonderen Vorteil, dass trotz Positionierungenauigkeiten des Lasersystems eine sichere Entschichtung der metallhaltigen Beschichtung im Verbindungsbereich erfolgen kann.

Die relative Positioniergenauigkeit Δy ist die Positioniergenauigkeit mit der zwei Gitterflächen relativ zueinander angeordnet werden können und gibt die Abweichung gegenüber dem nominellen Wert an. Ein Überstand von d = 0%*Δy bedeutet hier, dass eine Zinke die endlich ausgedehnte umrandende Gitterlinie der anderen Gitterfläche berührt, aber nicht über diese hinausragt. Die relative Positioniergenauigkeit Δy des Lasersystems beträgt beispielsweise weniger oder gleich 200 µm, bevorzugt kleiner oder gleich 50 µm. Ein derartiger Überstand hat den besonderen Vorteil, dass trotz der Positionierungenauigkeiten des Lasersystems eine sichere Entschichtung der metallhaltigen Beschichtung im Verbindungsbereich erfolgen kann.

In der erfindungsgemäßen beschichteten Scheibe ist die erste Gitterfläche über die offene Kammstruktur mit der geschlossenen Kammstruktur der zweiten Gitterfläche verbunden. Der Ausdruck "erste Gitterfläche" beschreibt eine beliebige Gitterfläche innerhalb des Kommunikationsfensters mit mindestens einer Längsseite mit einer offenen Kammstruktur. Längsseite bedeutet hier jede die Gitterflächen begrenzende Seite in der Scheibenebene. Es versteht sich, dass zur Aneinanderreihung von mehr als zwei Gitterflächen, eine oder mehrere Gitterflächen ebenfalls offene Kammstrukturen an mehreren Längsseiten aufweisen können. Der Ausdruck "zweite Gitterfläche" beschreibt eine weitere Gitterfläche mit mindestens einer geschlossenen Kammstruktur als Längsseite. (Der Ausdruck "erste" und "zweite" Gitterfläche beschreiben im Sinne der Erfindung demnach beliebige Gitterflächen auf, die die oben genannten Bedingungen zutreffen.) Durch die erfindungsgemäße Verbindung der mindestens zwei Gitterflächen werden doppelte Linien und nicht entschichtete Bereiche vermieden. Dies verringert die ansonsten als vom menschlichen Auge störend empfundene Wahrnehmung der Verbindung zwischen den einzelnen Gitterflächen. Zwischen den Kacheln nicht abgetragene Bereiche können zudem die Durchlässigkeit des Kommunikationsfensters für die gewünschte elektromagnetische Strahlung schwächen oder sogar stören.

Die Gitterlinien weisen bevorzugt eine Breite von 40 µm bis 200 µm, bevorzugt 70 µm bis 120 µm auf. Die Breite richtet sich nach der betreffenden elektromagnetischen Strahlung und der optischen Auflösung des zur Erzeugung notwendigen Laserscanners.

Die Gitterlinien bilden bevorzugt Quadrate und/oder Rechtecke. Die rechteckigen Formen können dabei bei gebogenen Scheiben, insbesondere bei dreidimensional gebogenen Scheiben, vom rechten Winkel abweichen und in beispielsweise ein Trapez oder Parallelogramm übergehen. Je nach Geometrie der Scheibe sind auch abgerundete oder teilweise abgerundete Kommunikationsfenster möglich.

Die Gitterflächen sind vorteilhafterweise rechteckig, quadratisch oder trapezförmig ausgebildet. Dies hat den besonderen Vorteil, dass sich in einfacher Weise mehrere Gitterflächen zu einem zusammenhängenden Kommunikationsfenster in erfindungsgemäßer Weise verbinden lassen.

Die Gitterlinien weisen bevorzugt einen Abstand g von 0,2 mm bis 15 mm, bevorzugt 0,7 mm bis 3 mm auf. Der bevorzugte Abstand der Gitterlinien ermöglicht eine ausreichende Transparenz für hochfrequente elektromagnetische Strahlung und insbesondere für Radio- oder Radarstrahlung.

In einer vorteilhaften Ausgestaltung der Erfindung weisen die zwei Gitterflächen einen Versatz h von 0% bis 50% des Gitterlinienabstands g auf. Der Versatz h beträgt bevorzugt von 0% bis 20% und besonders bevorzugt von 0% bis 10% des Gitterlinienabstand g. Der Versatz h wird orthogonal zu der Richtung der Gitterlinien mit den Zinken bestimmt. Durch einen derartigen geringen Versatz h werden die Gitterlinien der ersten Gitterfläche nahezu deckungsgleich durch die Gitterlinien der zweiten Gitterfläche fortgesetzt und es ergibt sich eine kaum wahrnehmbare optische Beeinträchtigung.

In einer vorteilhaften Ausgestaltung der Erfindung haben alle Zinken der offenen Kammstruktur die gleiche Länge a. Die Länge a der Zinken beträgt bevorzugt von 50% bis 150% der Summe aus Gitterabstand g und relativer Positioniergenauigkeit Δy, besonders bevorzugt von 80% bis 120 % der Summe aus Gitterabstand g und relativer Positioniergenauigkeit Δy und insbesondere von 95% bis 105% der Summe aus Gitterabstand g und relativer Positioniergenauigkeit Δy. Je geringer die Abweichung der Zinkenlänge a vom Gitterabstand g und desto geringer der Überstand d der Zinken über die geschlossenen Kammstruktur ist, desto gleichmäßiger ist der Übergang zwischen den beiden Gitterflächen und desto homogener und störungsfreier ist der optische Aspekt des Übergangsbereichs zwischen erster Gitterfläche und zweiter Gitterfläche.

In einer alternativen Ausgestaltung weisen mindestens eine Zinke und bevorzugt zwei Zinken eine Länge a von 50% bis 150%, bevorzugt von 80% bis 120 % und besonders bevorzugt von 95% bis 105% der Summe aus Gitterabstands g und relativer Positioniergenauigkeit Δy des Lasersystems auf. Die anderen Zinken sind kürzer ausgebildet und weisen bevorzugt eine Länge b von 50% bis 150%, besonders bevorzugt von 80% bis 120 % und insbesondere von 95% bis 105% des Gitterabstands g auf. In einer besonders vorteilhaften Ausgestaltung sind zumindest alle längeren Zinken der Länge a der offenen Kammstruktur mit der geschlossenen Kammstruktur verbunden. Dies hat den besonderen Vorteil, dass die Anzahl von sehr kurzen Doppellinien der Länge d auf die Anzahl der verlängert ausgebildeten Zinken reduziert wird und damit die ohnehin schon verbesserte optische Durchsicht weiter verbessert wird. Die längeren Zinken stellen dabei die elektrisch Unterbrechung der elektrisch leitfähigen metallhaltigen Schicht sicher, wobei die kürzeren Zinken einen gleichmäßigen, homogenen optischen Aspekt erzeugen, bei weitestgehend konstantem Gitterabstand g im Übergangsbereich zwischen erster Gitterfläche und zweiter Gitterfläche.

Es versteht sich, dass ohne Einschränkung der Erfindung, auch bei der geschlossenen Kammstruktur die orthogonal dazu verlaufenden Gitterlinien geringfügig über die umrandende Gitterlinie hinausstehen können. Dies kann sich insbesondere bereits durch die Positioniergenauigkeit des Laserscanners innerhalb einer Gitterfläche ergeben. In einer vorteilhaften Ausgestaltung stehen die Gitterlinien von 0% bis 10% des Gitterabstands g über die begrenzende Gitterfläche, bevorzugt beträgt der Überstand kleiner oder gleich der Positioniergenauigkeit des Laserscanners innerhalb einer Gitterfläche.

Die metallhaltige Beschichtung ist bevorzugt undurchlässig für Radio- und/oder Radarstrahlung, das heißt für elektromagnetische Strahlung im Radiofrequenzbereich wie FM, AM, UHF, VHF, DAB, Mobiltelefonie in den Bändern GSM 900, GSM 1800 und UMTS, satellitengestützter Navigation (GPS) oder Mikrowellenstrahlung. Im Bereich des erfindungsgemäßen Kommunikationsfensters ist die metallhaltige Beschichtung in Abhängigkeit der Gitterparameter, wie Gitterabstand und Form der Gittermaschen, durchlässig für die oben genannte Strahlung.

Die Erfindung umfasst des Weiteren eine Fahrzeugscheibe und insbesondere eine Windschutzscheibe oder eine Heckscheibe mit den Merkmalen der erfindungsgemäßen beschichteten Scheibe mit einem Kommunikationsfenster.

Die Erfindung umfasst des Weiteren ein Verfahren zur Herstellung einer beschichteten Scheibe mit einem Kommunikationsfenster. In einem ersten Verfahrensschritt wird eine Grundscheibe, beispielsweise eine Fahrzeugwindschutzscheibe mit einer metallhaltigen Beschichtung versehen. Optional können auch weitere dielektrische und weitere metallische Schichten aufgetragen werden. Im folgenden Schritt wird die metallhaltige Beschichtung mit einem Laser lokal in Form von Gitterlinien entschichtet und eine erste Gitterfläche mit mindestens einer Längsseite mit einer offenen Kammstruktur erhalten. Anschließend wird die metallhaltige Beschichtung benachbart zu der ersten Gitterfläche mit einem Laser lokal in Form von Gitterlinien entschichtet und eine zweite Gitterfläche mit mindestens einer Längsseite mit einem abgeschlossenes Gitter erhalten. Die Anordnung der zweiten Gitterfläche erfolgt dabei so, dass die erste Gitterfläche über die offene Kammstruktur mit der geschlossenen Kammstruktur der zweiten Gitterfläche verbunden wird.

In einer alternativen Ausgestaltung kann auch die zweite Gitterfläche mit geschlossener Kammstruktur zuerst entschichtet werden und anschließend die ersten Gitterfläche mit offener Kammstruktur mit der zweiten Kammstruktur verbunden werden.

Die erfindungsgemäße Verbindung der Gitterflächen über eine geöffnete und eine geschlossenen Kammstruktur vermeidet oder reduziert die Bildung von optisch störenden Doppellinien und somit Inhomogenitäten im optischen Aspekt.

Die metallhaltige Beschichtung wird mit einem Laser entschichtet. Der Laser ermöglicht ein sehr präzises und reproduzierbares Abtragen der metallhaltigen Beschichtung.

Der Laser wird bevorzugt mit einer Geschwindigkeit von 100 mm/s bis 10000 mm/s geführt. Der Laser weist bevorzugt eine Leistung von 1 W bis 10 kW auf und/oder umfasst bevorzugt einen Kohlendioxid-, YAG-, Nd-YAG-, Ytterbium-YAG-Laser, Holmium-YAG-Laser, Erbium-YAG-Laser, - Neodym-Glas-Laser, - Excimerlaser, - Faserlaser, - Disklaser, - Slablaser oder Dioden-Laser.

Der Laser wird bevorzugt über einen Plotter geführt. Der Plotter kann die Größe der Gitterflächen noch weiter steigern.

Die Erfindung umfasst des Weiteren die Verwendung der erfindungsgemäßen beschichteten Scheibe mit einem Kommunikationsfenster als Bau-, Fahrzeug-, Schiff-, Flugzeug-, Hubschrauber- oder Zugverglasung. Die erfindungsgemäße beschichtete Scheibe mit einem Kommunikationsfenster wird bevorzugt als Fahrzeugwindschutzscheibe oder Heckscheibe verwendet.

Im Folgenden wird die Erfindung anhand von Figuren näher erläutert. Die Figuren sind rein schematische Darstellungen und nicht maßstabsgetreu. Sie schränken die Erfindung in keiner Weise ein.

Es zeigen:
- Figur 1: eine schematische Ansicht einer Anordnung von zwei Gitterflächen nach dem Stand der Technik,
- Figur 2: eine schematische Ansicht einer Anordnung von zwei erfindungsgemäßen Gitterflächen,
- Figur 3: eine vergrößerte schematische Ansicht zweier erfindungsgemäß verbundener Gitterflächen nach Figur 2,
- Figur 4A: eine schematische Ansicht einer Gitterfläche mit offener Kammstruktur,
- Figur 4B: eine schematische Ansicht einer Gitterfläche mit geschlossener Kammstruktur,
- Figur 5: eine vergrößerte schematische Ansicht einer alternativen Ausgestaltung zweier erfindungsgemäß verbundener Gitterflächen,
- Figur 6A: eine schematische Ansicht einer alternativen Gitterfläche mit offener Kammstruktur,
- Figur 6B: eine schematische Ansicht einer alternativen Gitterfläche mit geschlossener Kammstruktur,
- Figur 7: eine schematische Ansicht eines Kommunikationsfensters mit vier erfindungsgemäß verbundenen Gitterflächen,
- Figur 8: eine schematische Ansicht der beschichteten Scheibe mit einem Kommunikationsfenster und
- Figur 9: ein Fließschema des Verfahrens zur Herstellung einer beschichteten Scheibe mit Kommunikationsfenster.

Die Strichelung der entschichteten Gitterlinien 40.2 dient nur zur Veranschaulichung; die Gitterlinien 40.2 sind in der Praxis durchgängig ausgebildet.

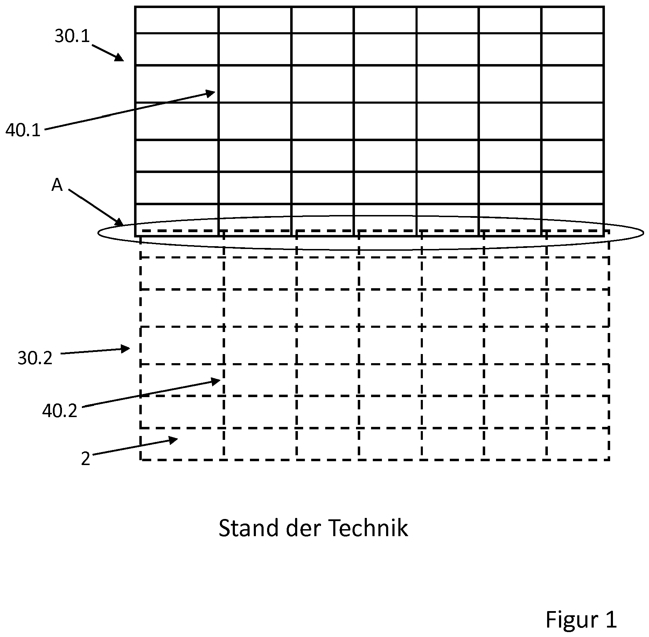

Figur 1 zeigt eine schematische Ansicht einer Anordnung von zwei Gitterflächen 30.1, 30.2 nach dem Stand der Technik. Die obere Gitterfläche 30.1 wird von entschichteten Gitterlinien 40.1 auf einer metallhaltigen Beschichtung 2 gebildet. Die untere Gitterfläche 30.2 wird ebenfalls von entschichteten Gitterlinien 40.2 auf der metallhaltigen Beschichtung 2 gebildet. Im Verbindungsbereich A zwischen der oberen Gitterfläche 30.1 und der unteren Gitterfläche 30.2 kommt es zu einer Überlagerung der Gitterlinien 40.1, 40.2. Die Ellipse A dient nur zur Veranschaulichung und ist nicht Teil des Kommunikationsfensters. Insbesondere die zwei unmittelbar benachbart angeordneten, horizontal verlaufenden Gitterlinien 40.1 und 40.2 haben nur einen geringen Abstand voneinander, was zu einer Linienverbreitung oder Verdopplung der Gitterlinien 40.1, 40.2 im Verbindungsbereich A führt. Eine solche Anordnung zweier Gitterlinien 40.1, 40.2 wird als optische Inhomogenität im Verbindungsbereich A als sehr störend und die Durchsicht behindernd wahrgenommen. Ein derartiges Kommunikationsfenster wäre für die Verwendung auf einer Windschutzscheibe eines Fahrzeugs nur schlecht geeignet.

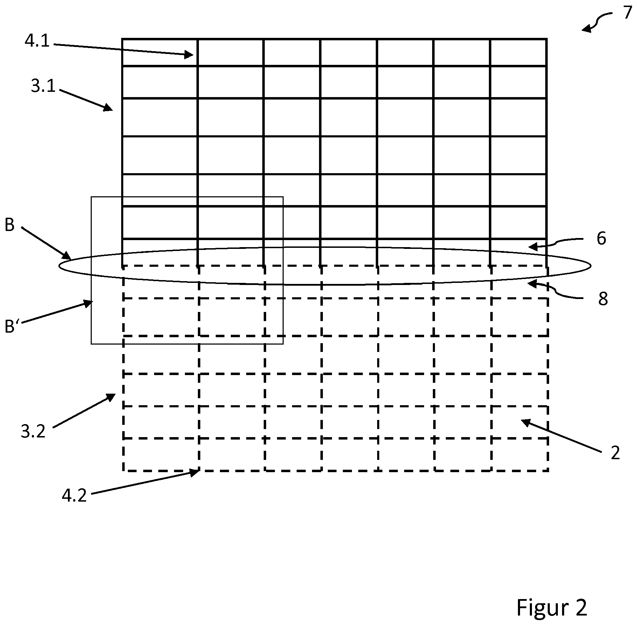

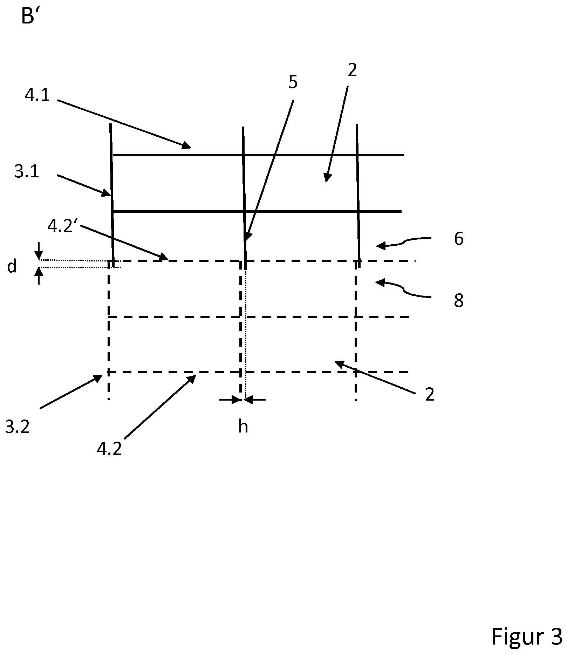

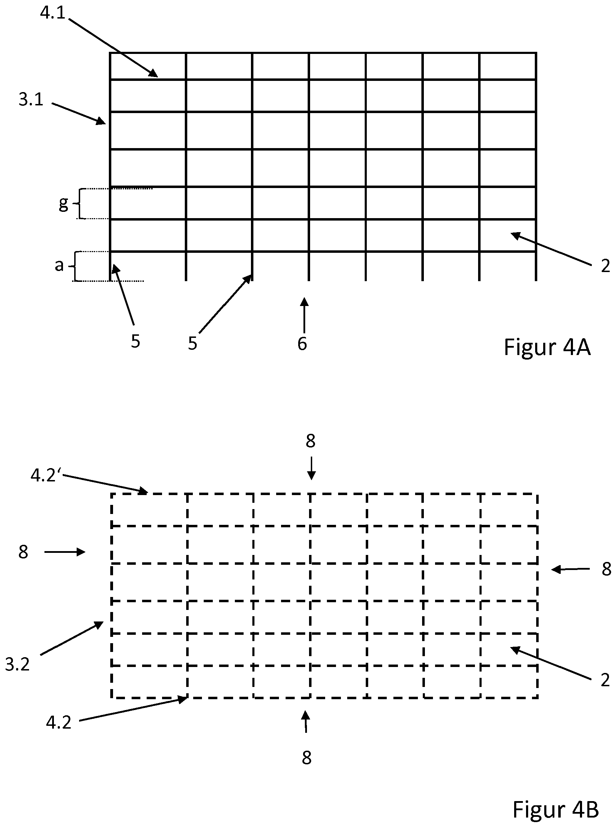

Figur 2 zeigt eine schematische Ansicht einer erfindungsgemäßen Anordnung von zwei Gitterflächen 3.1, 3.2 welche zusammen ein Kommunikationsfenster 7 bilden. Figur 3 zeigt einen vergrößerten Ausschnitt des Verbindungsbereichs B' aus Figur 2. Figur 4A zeigt eine einzelne Darstellung der ersten Gitterfläche 3.1 mit offener Kammstruktur 6 und Figur 4B eine einzelne Darstellung der zweiten Gitterfläche 3.2 mit geschlossener Kammstruktur 8.

Wie in Figur 4 A detailliert zu erkennen ist, weist die erste Gitterfläche 3.1 mehrere horizontal und vertikal angeordnete, entschichtete Gitterlinien 4.1 auf, die eine Netzstruktur mit beispielsweise rechteckigen Maschen bilden. Die Gitterlinien 4.1 werden beispielsweise durch Entschichtung einer metallischen Beschichtung 2 mittels eines Laserscanners hergestellt.

Die erste Gitterfläche 3.1 weist an einer Längsseite eine offene Kammstruktur 6 auf, die aus einzelnen Zinken 5 gebildet wird. Die Zinken 5 sind bevorzugt eine Fortsetzung der, in diesem Beispiel vertikal angeordneten, Gitterlinien 4.1. Der Gitterabstand g beträgt in diesem Beispiel 2 mm, die Länge a der Zinken beträgt beispielsweise ebenfalls etwa 2,1 mm, was beispielsweise der Summe aus dem Gitterabstand g von 2 mm und einer relativen Positioniergenauigkeit Δy von 0,1 mm entspricht.

Wie in Figur 4 B detailliert zu erkennen ist, weist die zweite Gitterfläche 3.2 mehrere horizontal und vertikal angeordnete, entschichtete Gitterlinien 4.2 auf, die eine Netzstruktur mit beispielsweise rechteckigen Maschen bilden. Vorteilhafterweise weist die zweite Gitterfläche 3.2 die gleiche Maschengröße wie die erste Gitterfläche 3.1 auf. Der Gitterabstand g beträgt demnach ebenfalls 2 mm Des Weiteren werden die Gitterlinien 4.2 in analoger Weise zu den Gitterlinien 4.1 hergestellt, beispielsweise durch Entschichtung der metallischen Beschichtung 2 mittels eines Laserscanners.

Die zweite Gitterfläche 3.2 weist in diesem Beispiel an allen Längsseiten eine geschlossene Kammstruktur 8 auf. Geschlossene Kammstruktur 8 bedeutet hier, dass die Gitterfläche 3.2 an der jeweiligen äußeren Begrenzung eine begrenzende oder umrandende Gitterlinie 4.2' aufweist und keine dazu orthogonal verlaufenden Gitterlinien 4.2 über die umrandende Gitterlinie 4.2' hinausragen.

Figur 2 zeigt eine erfindungsgemäße Anordnung der ersten Gitterfläche 3.1 und der zweiten Gitterfläche 3.2. Dabei ist die erste Gitterfläche 3.1 über die Zinken 5 der offenen Kammstruktur mit der umrandenden Gitterlinie 4.2' der geschlossenen Kammstruktur 8 der zweiten Gitterfläche 3.2 verbunden.

Figur 3 zeigt eine vergrößerte schematische Ansicht des Verbindungsbereichs B' zweier erfindungsgemäß verbundener Gitterflächen 3.1 und 3.2 nach Figur 2. Die Zinken 5 der offenen Kammstruktur 6 der ersten Gitterfläche 3.1 überlappen die umrandende Gitterlinie 4.2' der zweiten Gitterfläche um einen Überstand d von beispielsweise 0,1 mm. Durch die erfindungsgemäße Verbindung einer offenen Kammstruktur 6 und einer geschlossenen Kammstruktur 8 wird die Bildung einer optisch störenden Doppellinie sicher vermieden, wie sie nach dem Stand der Technik in Figur 1 bekannt ist.

Die erste Gitterfläche 3.1 und die zweite Gitterfläche 3.2 sind um einen Abstand h in horizontaler Richtung zueinander versetzt. Der Versatz h ist vorteilhafterweise kleiner oder gleich 10% des Gitterabstands g und beträgt beispielsweise 0,1 mm. Da die vertikal angeordneten Gitterlinien 4.1 und 4.2 nur in einem sehr kleinen Bereich der Länge d überlappen, sind auch in dieser Richtung keine störende Doppellinie oder Linienverbreiterung für den Nutzer der Scheibe erkennbar.

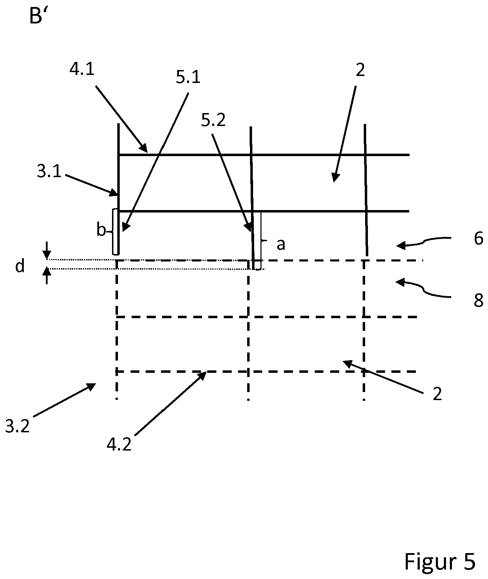

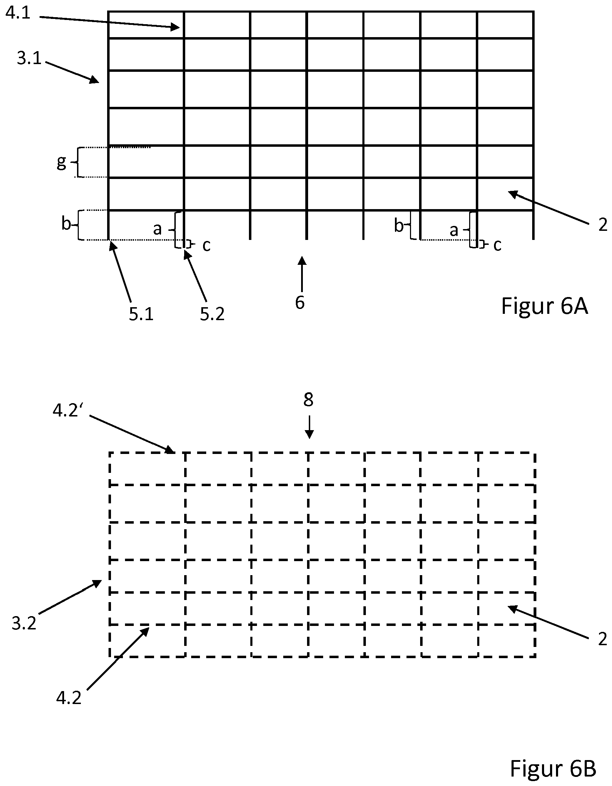

Figur 5 zeigt eine vergrößerte schematische Ansicht einer alternativen Ausgestaltung zweier erfindungsgemäß verbundener Gitterflächen 3.1 und 3.2. Figur 6A zeigt einer detaillierte vereinzelte Darstellung der ersten Gitterfläche 3.1 mit offener Kammstruktur 6. Die erste Gitterfläche 3.1 aus Figur 6A unterscheidet sich lediglich durch die Länge der Zinken 5.1,5.2 von der ersten Gitterfläche 3.1 aus Figur 4A und ist ansonsten in gleicher Weise ausgestaltet. Bei der ersten Gitterfläche 3.1 aus Figur 6A weisen beispielsweise zwei Zinken 5.2 eine Länge a auf und sind damit um eine Länge c länger als die Zinken 5.1 mit der Länge b. Die Länge b beträgt beispielsweise 2 mm, die Länge a beträgt beispielsweise 2,1 mm, so dass die längeren Zinken 5.2 um 5% länger und beispielsweise um eine relative Positioniergenauigkeit Δy von 0,1 mm länger ausgestaltet sind als die kürzeren Zinken 5.1. Die längeren Zinken 5.2 mit Länge a sind hier an den jeweils vorletzten äußeren Zinken der offenen Kammstruktur angeordnet. Dies hat den Vorteil, dass auch bei einem geringen Versatz h, der sich durch die relative Positionierungenauigkeit in der hier horizontalen Richtung ergibt, beide längeren Zinken 5.2 mit der geschlossenen Kammstruktur 8 verbunden sein können, während eine der ganz außenliegenden Zinken seitlich neben der geschlossenen Kammstruktur 8 verläuft.

Figur 6B zeigt eine detaillierte Darstellung der zweiten Gitterfläche 3.2 mit geschlossener Kammstruktur 8, wobei die zweite Gitterfläche 3.2 der Gitterfläche 3.2 aus Figur 4B entspricht.

Wie in Figur 5 erkennbar ist, sind nur die Zinken 5.2 mit der Länge a mit der zweiten Gitterstruktur 3.2 verbunden und weisen einen Überstand d von beispielsweise 0,05 mm auf.

Bei der Anordnung aus Figur 5 ist lediglich im Bereich des Überstands d der Zinken 5.2 mit der Länge a eine kleine Doppellinie mit der Länge des Überstands d zu erkennen. Im Bereich der Zinken 5.1 mit der Länge b kann eine kleine Lücke auftreten, die optisch kaum wahrnehmbar ist. Idealerweise berühren die Zinken 5.1 mit der Länge b sogar die begrenzende Gitterlinie 4.2' der geschlossenen Kammstruktur 8 des zweiten Gitters. Durch diese Ausgestaltung der Erfindung lässt sich eine noch geringere Störung der Durchsicht erzielen als bei der ohne bereits verbesserten Ausgestaltung nach Figur 3.

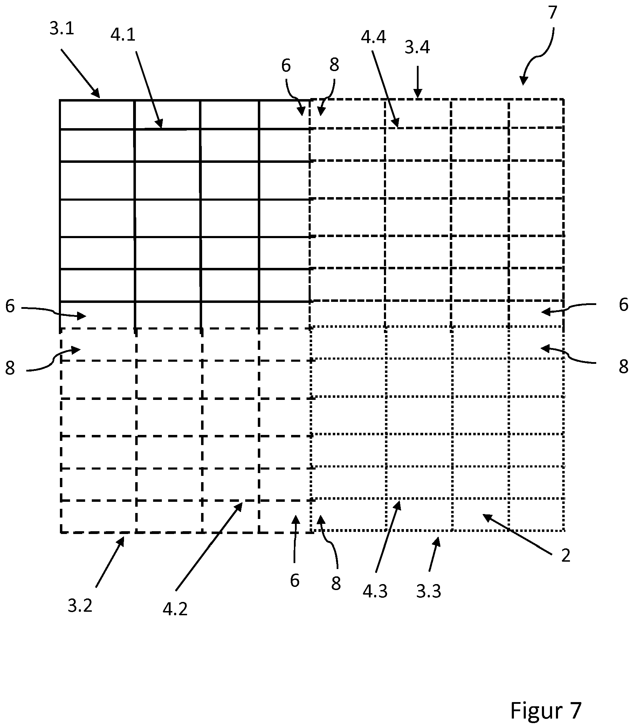

Figur 7 zeigt eine schematische Ansicht eines Kommunikationsfensters 7 mit beispielsweise vier erfindungsgemäß verbundenen Gitterflächen 3.1,3.2,3.3,3.4. Um größere Kommunikationsfenster 7 zu erhalten, können beliebig viele Gitterflächen nach dem erfindungsgemäßen Prinzip miteinander verbunden werden. Dabei ist jeweils die offene Kammstruktur 6 einer Gitterfläche über deren Zinken mit der geschlossenen Kammstruktur 8 einer benachbarten Gitterfläche verbunden.

Im dargestellten Beispiel weist die erste Gitterfläche 3.1 an ihrer unteren Längsseite eine offene Kammstruktur 6 auf. Die offenen Kammstruktur 6 an der unteren Längsseite ist mit der geschlossenen Kammstruktur 8 einer zweiten Gitterfläche 3.2 verbunden. Zur zweiten Gitterfläche 3.2 ist benachbart eine dritte Gitterfläche 3.3 angeordnet. Die zweite Gitterfläche 3.2 ist über eine weitere offene Kammstruktur 6 mit der geschlossenen Kammstruktur 8 der dritten Gitterfläche 3.3 verbunden. Die dritte Gitterfläche 3.3 ist über eine geschlossene Kammstruktur 8 an ihrer oberen Längsseite mit einer offenen Kammstruktur 6 einer vierten Gitterfläche 3.4 verbunden. Die vierte Gitterfläche 3.4 ist wiederum über eine geschlossene Kammstruktur 8 mit einer offenen Kammstruktur 6 der ersten Gitterfläche 3.1 verbunden. Es versteht sich, dass beliebig viele Gitterflächen, auch mit Versatz oder unterschiedlichen Formen und Größen derart aneinanderreihbar sind, wobei jeweils zwei Gitterflächen über eine offene Kammstruktur miteinander verbunden sind. Auf diese Weise lässt sich die Größe und die Eigenschaften des Kommunikationsfensters an die jeweiligen Gegebenheiten flexibel anpassen.

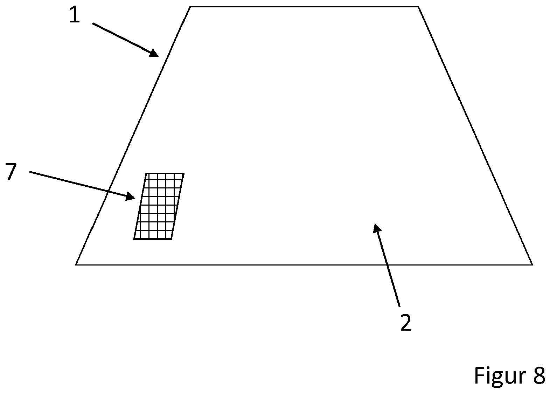

Figur 8 zeigt eine schematische Ansicht der beschichteten Scheibe mit einem Kommunikationsfenster 7. Auf der Grundscheibe 1, beispielsweise eine Fahrzeugwindschutzscheibe, befindet sich eine metallhaltige Beschichtung 2. Das teilentschichtete Kommunikationsfenster 7 ist im Gegensatz zu der metallhaltigen Beschichtung durchlässig für hochfrequente elektromagnetische Strahlung, beispielsweise im Radiofrequenz- und Mikrowellenbereich. Die metallhaltige Beschichtung 2 kann dabei im Inneren einer Verbundglasscheibe angeordnet sein. Die metallhaltige Beschichtung 2 kann alternativ auf einer der Außenseiten einer Einzelglasscheibe oder einer Verbundglasscheibe angeordnet sein. Durch die metallhaltige Beschichtung 2 ist die Transparenz der Scheibe für Infrarotstrahlung deutlich reduziert. Dies wird durch die teilentschichteten Kommunikationsfenster 7 nur unwesentlich beeinflusst.

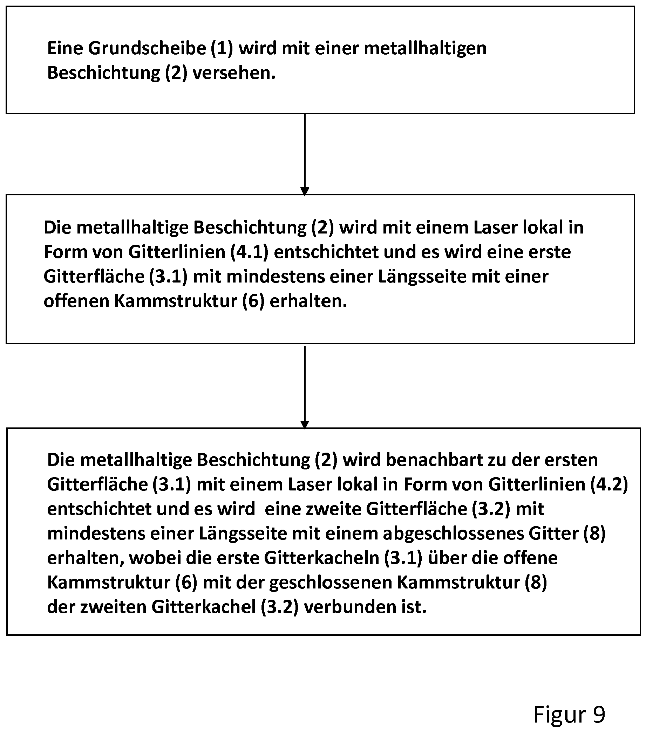

Figur 9 zeigt ein Fließschema eines Ausführungsbeispiels des erfindungsgemäßen Verfahrens zur Herstellung einer beschichteten Scheibe mit Kommunikationsfenster 7. In einem ersten Verfahrensschritt wird eine Grundscheibe 1 mit einer metallhaltigen Beschichtung 2 versehen. Im folgenden Schritt wird die metallhaltige Beschichtung 2 mit einem Laser lokal in Form von Gitterlinien 4.1 entschichtet und eine erste Gitterfläche 3.1 mit mindestens einer Längsseite mit einer offenen Kammstruktur 6 erhalten. Anschließend wird die metallhaltige Beschichtung 2 benachbart zu der ersten Gitterfläche 3.1 mit ebenfalls einem Laser lokal in Form von Gitterlinien 4.2 entschichtet und eine zweite Gitterfläche 3.2 mit mindestens einer Längsseite mit einer abgeschlossenen Kammstruktur 8 erhalten. Die zweite Gitterfläche 3.2 wird dabei so angeordnet, dass die erste Gitterfläche 3.1 über die Zinken 5 der offenen Kammstruktur 6 mit der geschlossenen Kammstruktur 8 der zweiten Gitterfläche 3.2 verbunden ist.

### Bezugszeichenliste

- 1: Grundscheibe
- 2: metallhaltige Beschichtung
- 3.1: erste Gitterfläche
- 3.2: zweite Gitterfläche
- 4.1: Gitterlinien der ersten Gitterfläche 3.1
- 4.2: Gitterlinien der zweiten Gitterfläche 3.2
- 4.2': begrenzende oder umrandende Gitterlinie der geschlossenen Kammstruktur 8
- 5,5.1,5.2: Zinke
- 6: offene Kammstruktur
- 7: Kommunikationsfenster/ erfindungsgemäße Anordnung der Gitterflächen 3.1, 3.2
- 8: geschlossene Kammstruktur
- 30.1, 30.2: Gitterfläche nach dem Stand der Technik
- 40.1, 40.2: Gitterlinien nach dem Stand der Technik
- a: Länge des Zinken 5 und 5.2
- b: Länge des Zinken 5.1
- c: Länge
- d: Überstand
- g: Gitterlinienabstand
- Δy: relative Positioniergenauigkeit des Lasersystems
- A: Verbindungsbereich zwischen der Gitterfläche 3.2 und der Gitterfläche 3.2' nach dem Stand der Technik
- B: erfindungsgemäßer Verbindungsbereich zwischen der ersten Gitterfläche 3.1 und der zweiten Gitterfläche 3.2
- B': Ausschnitt

## Patentansprüche

1. Verfahren zur Herstellung einer beschichteten Scheibe mit Kommunikationsfenster, wobei,
a. eine Grundscheibe (1) mit einer metallhaltigen Beschichtung (2) versehen wird und
b. die metallhaltige Beschichtung (2) mit einem Laser lokal in Gitterlinien (4.1, 4.2) entschichtet wird, wobei eine erste Gitterfläche (3.1) mit mindestens einer Längsseite mit einer offenen Kammstruktur (6) mit Zinken (5) erhalten wird und eine zweite Gitterfläche (3.2) mit mindestens einer Längsseite mit einer geschlossenen Kammstruktur (8) erhalten wird und die erste Gitterfläche (3.1) über mindestens eine Zinke (5) der offenen Kammstruktur (6) mit der geschlossenen Kammstruktur (8) der zweiten Gitterfläche (3.1) verbunden wird .

2. Verfahren nach Anspruch 1, wobei der Laser mit einer Geschwindigkeit von 100 mm/s bis 10000 mm/s geführt wird.

3. Verfahren nach Anspruch 1 oder 2, wobei der Laser einen Kohlendioxid-, YAG- , Nd-YAG-, Ytterbium-YAG-Laser, Holmium-YAG-Laser, Erbium-YAG-Laser, - Neodym-Glas-Laser, - Excimerlaser, - Faserlaser, - Disklaser, - Slablaser oder Dioden-Laser umfasst und der Laser eine Leistung von 1 W bis 10 kW aufweist.

4. Beschichtete Scheibe mit einem Kommunikationsfenster (7), hergestellt durch das Verfahren nach Anspruch 1, mindestens umfassend:
a. eine Grundscheibe (1),
b. eine metallhaltige Beschichtung (2),
c. eine erste Gitterfläche (3.1) und eine zweite Gitterfläche (3.2) innerhalb der metallhaltigen Beschichtung (2),
d. wobei die erste Gitterfläche (3.1) und die zweite Gitterfläche (3.2) entschichtete Bereiche in Form von netzartig angeordneten Gitterlinien (4.1, 4.2) aufweisen,
e. die Gitterlinien (4.1) in der ersten Gitterfläche (3.1) auf mindestens einer Längsseite in eine offene Kammstruktur (6) mit Zinken (5) und die Gitterlinien (4.2) in der zweiten Gitterfläche (3.2) auf mindestens einer Längsseite in eine geschlossene Kammstruktur (8) übergehen, wobei die geschlossene Kammstruktur durch eine umrandende Gitterlinie nach außen hin begrenzt ist,
f. die erste Gitterfläche (3.1) über mindestens eine Zinke (5) der offenen Kammstruktur (6) mit der geschlossenen Kammstruktur (8) der zweiten Gitterfläche (3.2) verbunden ist,
wobei die Zinke (5) der offenen Kammstruktur (6) einen von Null verschiedenen Überstand d mit der geschlossenen Kammstruktur (8) aufweist.

5. Beschichtete Scheibe nach Anspruch 4, wobei der Überstand d von 0,1 mm bis 0,4 mm beträgt.

6. Beschichte Scheibe nach einem der Ansprüche 4 oder 5, wobei die Gitterlinien (4.1, 4.2) eine Breite von 40 µm bis 200 µm, bevorzugt 70 µm bis 120 µm aufweisen.

7. Beschichtete Scheibe nach Anspruch 4 oder 6, wobei die Gitterlinien (4.1, 4.2) Quadrate und/oder Rechtecke bilden.

8. Beschichte Scheibe nach einem der Ansprüche 4 bis 7, wobei die Gitterlinien (4.1, 4.2) einen Abstand g von 0,2 mm bis 15 mm, bevorzugt von 0,7 mm bis 3 mm aufweisen.

9. Beschichtete Scheibe nach einem der Ansprüche 4 bis 8, wobei die Länge a der Zinken (5) von 50% bis 150%, bevorzugt von 80% bis 120 % und besonders bevorzugt von 95% bis 105% der Summe aus Gitterabstand g und relativer Positioniergenauigkeit Δy des Lasersystems beträgt.

10. Beschichtete Scheibe nach einem der Ansprüche 4 bis 9, wobei mindestens zwei Zinken (5.2) eine Länge a von 50% bis 150%, bevorzugt von 80% bis 120 % und besonders bevorzugt von 95% bis 105% der Summe aus Gitterabstand g und relativer Positioniergenauigkeit Δy des Lasersystems aufweisen und die anderen Zinken (5.1) kürzer ausgebildet sind und bevorzugt eine Länge b von 50% bis 150%, besonders bevorzugt von 80% bis 120 % und insbesondere von 95% bis 105% des Gitterabstands g aufweisen und zumindest alle Zinken (5.2) der Länge a mit der geschlossenen Kammstruktur (8) verbunden sind.

11. Beschichtete Scheibe nach einem der Ansprüche 4 bis 10, wobei mindestens zwei Zinken (5) und bevorzugt alle Zinken (5) der offenen Kammstruktur (6) mit der geschlossenen Kammstruktur (8) verbunden sind.

12. Beschichtete Scheibe nach einem der Ansprüche 4 bis 11, wobei die metallhaltige Beschichtung (2) undurchlässig für hochfrequente elektromagnetische Strahlung und insbesondere für Radar- und/oder Radiowellen ist.

13. Verwendung der beschichteten Scheibe nach einem der Ansprüche 4 bis 12 als Bau-, Fahrzeugs-, Schiff-, Flugzeug-, Hubschrauber- oder Zugverglasung, insbesondere als Windschutzscheibe oder Heckscheibe.

## Claims

1. Method for producing a coated pane having a communication window, wherein,
a. a base pane (1) is provided with a metal-containing coating (2), and
b. the metal-containing coating is de-coated with a laser locally in grid lines (4.1,4.2), wherein a first grid area (3.1) with at least one long side with an open comb structure (6) with teeth (5) is obtained, and a second grid area (3.2) with at least one long side with a closed comb structure (8) is obtained, and the first grid area (3.1) is connected via at least one tooth (5) of the open comb structure (6) to the closed comb structure (8) of the second grid area (3.1).

2. Method according to claim 1, wherein the laser is guided at a speed from 100 mm/s to 10000 mm/s.

3. Method according to claim 2 or 3, wherein the laser comprises a carbon dioxide, YAG, Nd-YAG, ytterbium-YAG laser, holmium-YAG laser, erbium-YAG laser, -neodymium-glass laser, -excimer laser, -fiber laser, -disk laser, -slab laser, or diode laser, and the laser has output from 1 W to 10 kW.

4. Coated pane having a communication window (7), produced through the method according to claim 1, comprising at least:
a. a base pane (1),
b. a metal-containing coating (2),
c. a first grid area (3.1) and a second grid area (3.2) within the metal-containing coating (2),
d. wherein the first grid area (3.1) and the second grid area (3.2) have de-coated regions in the form of grid lines (4.1, 4.2) arranged in a meshlike manner,
e. the grid lines (4.1) in the first grid area (3.1) transition on at least one long side into an open comb structure (6) with teeth (5), and the grid lines (4.2) in the second grid area (3.2) transition on at least one long side into a closed comb structure (8), wherein
f. the first grid area (3.1) is connected via at least one tooth (5) of the open comb structure (6) to the closed comb structure (8) of the second grid area (3.2).

5. Coated pane according to claim 4, wherein the overlap d is from 0.1 mm to 0.4 mm.

6. Coated pane according to one of claims 4 or 5, wherein the grid lines (4.1, 4.2) have a width from 40 µm to 200 µm, preferably 70 µm to 120 µm.

7. Coated pane according to claim 4 or 6, wherein the grid lines (4.1, 4.2) form squares and/or rectangles.

8. Coated pane according to one of claims 4 through 7, wherein the grid lines (4.1, 4.2) have a distance g from 0.2 mm to 15 mm, preferably from 0.7 mm to 3 mm.

9. Coated pane according to one of claims 4 through 8, wherein the length a of the teeth (5) is from 50% to 150%, preferably from 80% to 120% and particularly preferably from 95% to 105% of the sum of the distance g between the grid lines and the relative positioning accuracy Δy of the laser system.

10. Coated pane according to one of claims 4 through 9, wherein at least two teeth (5.2) have a length a from 50% to 150%, preferably from 80% to 120%, and particularly preferably from 95% to 105% of the sum of the distance g between the grid lines and the relative positioning accuracy Δy of the laser system, and the other teeth (5.1) are implemented shorter and preferably have a length b from 50% to 150%, particularly preferably from 80% to 120%, and in particular from 95% to 105% of the distance g between the grid lines and at least all teeth (5.2) of the length a are connected to the closed comb structure (8).

11. Coated pane according to one of claims 4 through 10, wherein at least two teeth (5) and preferably all teeth (5) of the open comb structure (6) are connected to the closed comb structure (8).

12. Coated pane according to one of claims 4 through 11, wherein the metal-containing coating (2) is opaque to high-frequency electromagnetic radiation and in particular to radar waves and/or radio waves.

13. Use of the coated pane according to one of claims 4 to 12 as architectural, motor vehicle, ship, airplane, helicopter, or train glazing, in particular as a windshield or a rear window.

## Revendications

1. Procédé de fabrication d'une vitre revêtue avec fenêtre de communication où
a. une plaque de base (1) est munie d'un revêtement contenant du métal (2),
b. le revêtement comprenant du métal (2) est décapé localement par un laser en lignes de quadrillage (4.1, 4.2), où une première zone de grille (3.1) est obtenue avec au moins un côté longitudinal avec une structure ouverte de peigne (6) avec des dents (5) et une deuxième zone de grille (3.2) est obtenue avec au moins un côté longitudinal avec une structure fermée de peigne (8) et la première zone de grille (3.1) est connecté par au moins une dent (5) de la structure ouverte de peigne (6) avec la structure fermée de peigne (8) de la deuxième zone de grille (3.1).

2. Procédé selon la revendication 1, où le laser est guidé à une vitesse de 100 mm/s à 10000 mm/s.

3. Procédé selon la revendication 1 ou 2, où le laser comprend un laser à dioxyde de carbone, à YAG, à Nd-YAG, un laser à ytterbium-YAG, un laser à holmium-YAG, un laser à erbium-YAG, un laser à néodyme-verre, un laser à excimère, un laser à fibre, un laser à disque, laser à slab ou laser à diodes et le laser a une performance de 1 W à 10 kW.

4. Vitre revêtue avec une fenêtre de communication (7), produit par le procédé selon la revendication 1, comprenant au moins :
a. une plaque de base (1),
b. un revêtement contenant du métal (2),
c. une première grille (3.1) et une deuxième grille (3.2) à l'intérieur du revêtement contenant du métal (2),
d. où la première zone de grille (3.1) et la deuxième zone de grille (3,2) présentent des régions décapées sous forme de lignes (4.1, 4.2) de quadrillage réticulées,
e. les lignes de quadrillage (4.1) se prolongent dans la première zone de grille (3.1) sur au moins un côté longitudinal dans une structure ouverte de peigne (6) avec des dents (5) et les lignes de quadrillage (4.2) se prolongent dans la deuxième zone de grille (3.2) sur au moins un côté longitudinal dans une structure fermée de peigne (8) où la structure fermée de peigne est délimitée à l'extérieur par une ligne de quadrillage entourant,
f. la première zone de grille (3.1) est connectée par au moins une dent (5) de la structure ouverte de peigne (6) à la structure fermée de peigne (8),
où la dent (5) de la structure ouverte de peigne (6) présente une saillie d différente de zéro par rapport à la structure fermée de peigne.

5. Vitre revêtue selon la revendication 4, où la saillie d est de 0,1 mm à 0,4 mm.

6. Vitre revêtue selon l'une des revendications 4 ou 5, où les lignes de quadrillage (4.1, 4.2) présentent une largeur de 40 µm à 200 µm, de préférence de 70 µm à 120 µm.

7. Vitre revêtue selon la revendication 4 ou 6, où les lignes de quadrillage (4.1, 4.2) forment des carrés et/ou des rectangles.

8. Vitre revêtue selon l'une des revendications 4 à 7, où les lignes de quadrillage (4.1, 4.2) présentent un écart g de 0,2 mm à 15 mm, de préférence de 0,7 mm à 3 mm.

9. Vitre revêtue selon l'une des revendications 4 à 8, où la longueur a des dents (5) de 50 % à 150 % de préférence de 80 à 120 % une et de manière particulièrement préférée de 95 à 105 % de la somme de l'espacement du quadrillage g et la précision de positionnement relative du système laser Ay.

10. Vitre revêtue selon l'une des revendications 4 à 9, où au moins deux dents (5.2) présentent une longueur a de 50% à 150% de préférence de 80% à 120% une et de manière particulièrement préférée de 95% à 105% de la somme de l'espacement du quadrillage g et la précision de positionnement relative du système laser Ay et les autres dents (5.1) sont formées plus courtes et de préférence présentent une longueur b de 50% à 150%, de manière particulièrement préférée de 80% à 120% et en particulier de 95% à 105% de l'espacement du quadrillage g et au moins toutes les dents (5.2) de la longueur a sont connectés à la structure fermée de peigne (8).

11. Vitre revêtue selon l'une des revendications 4 à 10, au moins deux dents (5) et de préférence toutes les dents (5) de la structure ouverte de peigne (6) sont connectés à la structure fermée de peigne (8).

12. Vitre revêtue selon l'une des revendications 4 à 11, où le revêtement contenant du métal (2) est imperméable au rayonnement électromagnétique de haute fréquence et en particulier au radar et/ou aux ondes radio.

13. Utilisation de la vitre revêtue selon l'une des revendications 4 à 12 comme vitrage dans le bâtiment, de véhicules, de bateaux, d'avions, d'hélicoptères ou de trains, en particulier comme pare-brise ou vitre arrière.
